# EUROPEAN PATENT APPLICATION

(11) **EP 0 567 742 A2**
(43) Date of publication of application: **03.11.1993**
(21) Application number: 93103471.4
(22) Date of filing: 04.03.1993
(51) Int. Cl.: B29D 30/24, B29D 30/26, B29C 55/24, B65G 47/90

(54) **Apparatus and method for uniformly enlarging or reducing the diameter of a cylindrical member**

(30) Priority: 04.03.1992 JP 46663/92; 30.11.1992 JP 320838/92
(71) Applicant: BRIDGESTONE CORPORATION, Tokyo 104 (JP)
(72) Inventor: Shiga, Mamoru, c/o Bridgestone Corporation, Kodaira-shi, Tokyo (JP); Suetomi, Satoru, c/o Bridgestone Corporation, Kodaira-shi, Tokyo (JP)
(74) Representative: Görg, Klaus, Dipl.-Ing.

(57) **Abstract**

Enlarging/reducing segments (42) are attached to a drum shaft (12) of a drum for uniformly enlarging the diameter of a cylindrical member by means of three links (32, 36, 38) in such a manner as to be capable of enlarging or reducing the diameter of the drum. A plurality of rollers (46, 80, 82) serving as rotating members are provided on each enlarging/reducing segment (42). Consequently, a tensile force acting on a ply in the circumferential direction during the enlargement of the enlarging/reducing segments (42) is not restrained by the rotation of the rollers. Hence, the diameter of the ply can be enlarged uniformly, and the pitch of cords embedded in the ply can be maintained.

## Description

### BACKGROUND OF THE INVENTION

### Field of the Invention:

The present invention relates to an apparatus and method for uniformly enlarging the diameter of a cylindrical member used in the process of assembling raw tires (a forming process), a drum for uniformly enlarging the diameter of a cylindrical member, and an apparatus for uniformly enlarging or reducing the diameter of a cylindrical member. More particularly, the present invention concerns an apparatus and method for uniformly enlarging the diameter of a cylindrical member, a drum for uniformly enlarging the diameter of a cylindrical member, and an apparatus for uniformly enlarging or reducing the diameter of a cylindrical member which are capable of enlarging the diameter of a cylindrical member, such as a tire constituent member, such that the cord pitch becomes uniform at various portions.

### Description of the Related Art:

Conventionally, a drum for uniformly expanding the diameter of a cylindrical member, which is used in the process of forming green tires, has as its major components a shaft, segments, flanges for supporting the segments, and links.

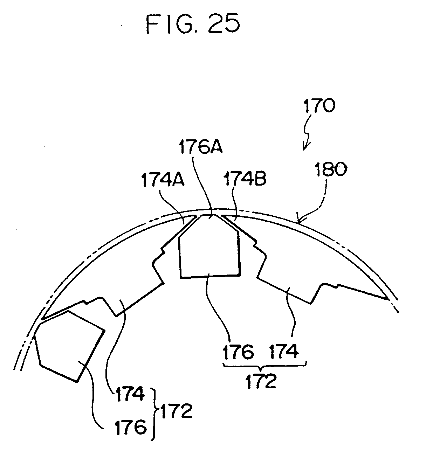

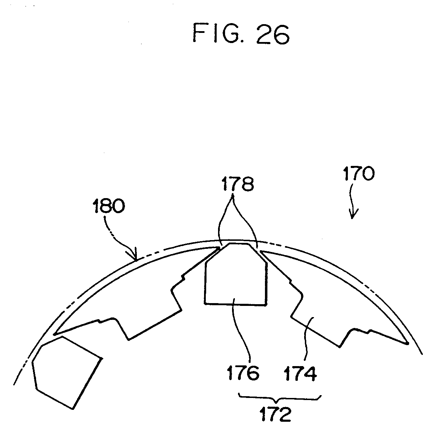

As shown in Figs. 25 and 26, segments 172 of this diameter-expanding drum 170 are comprised of large segments 174. and small segments 176. As shown in Fig. 25, when the segments are in a state in which the diameter is reduced, the portion of each small segment 176 excluding a head 176A thereof is located below opposing ends 174A and 174B of adjacent ones of the large segments 174.

With this diameter-expanding drum 170, however, when the segments are in a state in which the diameter is enlarged, as shown in Fig. 26, the interval between the adjacent ones of the large segments 174 becomes large, and each small segment 176 projects from between them. For this reason, when the segments are in the state of the enlarged diameter, recesses 178 are each formed at a junction between the large segment 174 and the small segment 176, and the diameter-enlarging drum 170 and a rubber belt 180 incorporating cords and wrapped around an outer periphery of the diameter-enlarging drum 170 do not contact each other at the recesses 178.

Accordingly, frictional resistance occurring between the rubber belt 180 and the outer periphery of the diameter-enlarging drum 170 during the enlargement of the diameter of the segments does not occur at the recesses 178. For this reason, a tensile force acting on the rubber belt 180 in the circumferential direction thereof becomes nonuniform, so that there has conventionally been a drawback that the rubber belt 180 cannot be enlarged uniformly.

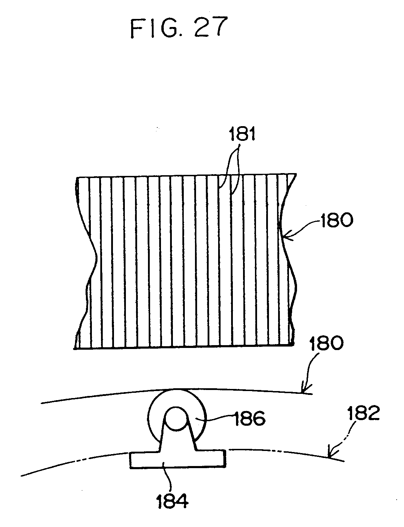

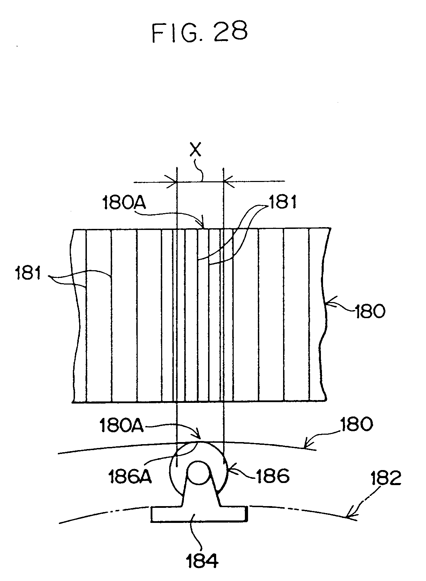

In addition, as an apparatus similar in construction to the present invention, an apparatus disclosed in in Japanese Patent Application Publication No. 51901/1981 is known in which improvements are made in the centering of the cylindrical rubber belt 180 incorporating the cords. Namely, as shown in Figs. 27 and 28, a diameter-enlarging drum 182 is provided with rollers 186 which are each disposed on an outer periphery of an enlarging/reducing segment 184, the rollers 186 being adapted to smoothen the movement of the rubber belt 180 in the axial direction of the drum so as to effect the centering of the rubber belt 180.

With this drum 182, however, only one roller 186 is provided on the enlarging/reducing segment 184. Accordingly, when the diameter of the segments is enlarged, as shown in Fig. 28, a portion 186A of the roller 186 which is brought into contact with the rubber belt 180 is adapted to push the rubber belt 180 in the radially outward direction of the drum 182. For this reason, in a vicinity 180A (within the range indicated by X in Fig. 27) of a portion of the rubber belt 180 which is brought into contact with the roller 186, the elongation of the rubber belt 180 in the circumferential direction of the drum 182 (in the left-and-right direction in Fig. 27) is small as compared with the elongation of both side portions thereof. As a result, there occurs the drawback that the number of cords 181 embedded in the rubber belt 180, i.e., the number of cords per unit width, becomes nonuniform.

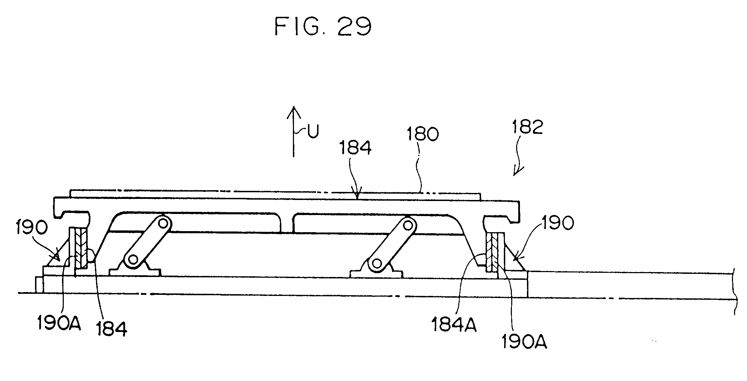

In addition, as shown in Figs. 28 and 29, with this drum 182, a pair of segment flanges 190 are respectively provided on both ends of the enlarging/reducing segment 184. When the diameter of the segments is enlarged, a sliding surface 190A of each of these segment flanges 190 slides on each of a pair of guides 184A of the segment 184 so as to guide the segment 184 in the direction of enlarging the diameter (in the direction of arrow U in Fig. 28) and to prevent the looseness of the segment 184. Hence, if the diameter of the drum 182 is made large in design for enlargement of the diameter, the height H of the flanges 190 becomes large, with the result that the diameter of the drum 182 during the reduction of the diameter is restricted by the height H of the flanges 190. Therefore, there is a problem in that the rate of enlargement of the diameter of the drum becomes 120% or thereabouts, thereby disadvantageously reducing the adaptable range of the drum.

### SUMMARY OF THE INVENTION

In view of the above-described circumstances, an object of the present invention is to provide an apparatus for uniformly enlarging the diameter of a cylindrical member which is capable of uniformly enlarging the diameter of a cylindrical member such as a tire constituent member while maintaining the cord pitch.

To this end, in accordance with one aspect of the present invention, there is provided an apparatus for uniformly enlarging the diameter of a cylindrical member, comprising:
a plurality of rotating members arranged at predetermined intervals in a circumferential direction of the cylindrical member and adapted to support the cylindrical member from an inner side of the cylindrical member;
a plurality of enlarging/reducing members for rotatably supporting the rotating members; and
enlarging/reducing means for supporting the enlarging/reducing members and adapted to move the enlarging/reducing members in a radial direction of the cylindrical member.

Another object of the present invention is to provide a drum for uniformly enlarging the diameter of a cylindrical member which is capable of uniformly enlarging the diameter of a cylindrical member such as a tire constituent member while maintaining the cord pitch.

To this end, in accordance with another aspect of the present invention, there is provided a drum for uniformly enlarging the diameter of a cylindrical member, comprising:
a drum shaft disposed on an axis of the cylindrical member;
a cylinder adapted to move along the drum shaft;
a plurality of enlarging/reducing segment-supporting members extending radially from the cylinder and capable of enlarging the diameter of the drum as the cylinder moves;
a plurality of enlarging/reducing segments respectively supported by the enlarging/reducing segment-supporting members; and
at least two rotating members supporting by the enlarging/reducing segment and adapted to support an inner surface of the cylindrical member at portions spaced apart from each other in a circumferential direction thereof.

Still another object of the present invention is to provide a method for enlarging the diameter of a cylindrical member which is capable of uniformly enlarging the diameter of a cylindrical member such as a tire constituent member while maintaining the cord pitch.

To this end, in accordance with still another aspect of the invention, there is provided a method of enlarging the diameter of a cylindrical member for uniformly extending in a radial direction a plurality of portions of a cylindrical member spaced apart from each other in a circumferential direction of the cylindrical member, comprising the steps of:
arranging rotating members at predetermined intervals in the circumferential direction;
supporting an inner surface of the cylindrical member by means of the rotating members in such a manner as not to impede a tensile force acting on the cylindrical member in the circumferential direction during enlargement of the diameter; and
driving the rotating members in a radially outward direction of the cylindrical member so as to uniformly stretch contact portions of the cylindrical member contacting the rotating members.

A further object of the present invention is to provide an apparatus for uniformly enlarging or reducing the diameter of a cylindrical member which is capable of uniformly enlarging the diameter of a cylindrical member such as a tire constituent member while maintaining the cord pitch.

To this end, in accordance with a further aspect of the invention, there is provided an apparatus for uniformly enlarging or reducing the diameter of a cylindrical member for setting the cylindrical member which is in a state of enlarged diameter onto an outer periphery of a mounting member, comprising:
a plurality of hooks arranged at positions spaced apart from each other in a circumferential direction of the cylindrical member in correspondence with both axial ends of the cylindrical member and adapted to be inserted from both axial sides of the cylindrical member to maintain the state of enlarged diameter;
a plurality of rotating members respectively provided for the hooks and disposed at positions of contact with the cylindrical member;
a pair of support plates for swingably supporting outer ends of the plurality of hooks in a radial direction of the cylindrical member in correspondence with the axial ends of the cylindrical member;
swinging means for swinging the hooks;
enlarging and reducing means for moving the hooks in the radial direction of the cylindrical member; and
moving means for moving the support plates in directions in which the support plates move toward or away from each other.

In accordance with the above-described arrangements, a plurality of rotating members supporting the cylindrical member from the inner side at predetermined intervals in the circumferential direction are supported by enlarging/reducing members. These enlarging/reducing members are moved in the radial direction of the cylindrical member. Accordingly, the rotating members unfailingly rotate by means of the tension acting on the cylindrical member, so that the contact portions of the cylindrical member contacting the rotating members are moved as they are pulled in the direction of the other rotating members. Namely, since the expansion of the contact portions of the cylindrical member contacting the rotating members is not restrained by the rotating members, the diameter of the cylindrical member can be enlarged uniformly. Particularly in a case where a ply member is made to undergo the enlargement of its diameter, the variation of the cord pitch can be prevented.

The above and other objects and features of the invention will more fully appear from the following detailed description when read in conjunction with the accompanying drawings.

### BRIEF DESCRIPTION OF THE DRAWINGS

Fig. 1 is a cross-sectional view of a drum for uniformly enlarging the diameter of a cylindrical member in accordance with a first embodiment of the present invention, the view being taken in the axial direction of the drum;
Fig. 2 is another cross-sectional view, taken in the axial direction of the drum, of the drum for uniformly enlarging the diameter of a cylindrical member in accordance with the first embodiment of the present invention;
Fig. 3 is a cross-sectional view, taken in parallel with the axial direction of the drum, of the drum for uniformly enlarging the diameter of a cylindrical member in accordance with the first embodiment of the present invention;
Fig. 4 is a diagram illustrating the operation of the drum for uniformly enlarging the diameter of a cylindrical member in accordance with the first embodiment of the present invention;
Fig. 5 is a diagram illustrating the operation of the drum for uniformly enlarging the diameter of a cylindrical member in accordance with the first embodiment of the present invention;
Figs. 6A to 6C are diagrams illustrating a tire-forming operation using the drum for uniformly enlarging the diameter of a cylindrical member in accordance with the first embodiment of the present invention;
Fig. 7 is a cross-sectional view of a formed tire;
Fig. 8 is a cross-sectional view, taken in the axial direction of the drum, of another hook-inserting position of the drum for uniformly enlarging the diameter of a cylindrical member in accordance with the first embodiment of the present invention;
Fig. 9 is a cross-sectional view, taken in the axial direction of the drum, of a modification of an enlarging/reducing segment of the drum for uniformly enlarging the diameter of a cylindrical member used in the first embodiment of the present invention;
Fig. 10 is a cross-sectional view, taken in the axial direction of the drum, of another modification of the enlarging/reducing segment of the drum for uniformly enlarging the diameter of a cylindrical member used in the first embodiment of the present invention;
Fig. 11 is a perspective view of a drum for uniformly enlarging the diameter of a cylindrical member in accordance with a second embodiment of the present invention;
Fig. 12 is a cross-sectional view, taken in the axial direction of the drum, of a modification of an enlarging/reducing segment of the drum for uniformly enlarging the diameter of a cylindrical member used in the second embodiment of the present invention;
Fig. 13 is a cross-sectional view, taken in the axial direction of the drum, of another modification of the enlarging/reducing segment of the drum for uniformly enlarging the diameter of a cylindrical member used in the second embodiment of the present invention;
Fig. 14A is a perspective view of still another modification of the enlarging/reducing segment of the drum for uniformly enlarging the diameter of a cylindrical member used in the second embodiment of the present invention;
Fig. 14B is a cross-sectional view taken along line B - B of Fig. 14A;
Fig. 15 is a cross-sectional view, taken in parallel with the axial direction of the drum, of a further modification of the enlarging/reducing segment of the drum for uniformly enlarging the diameter of a cylindrical member used in the second embodiment of the present invention;
Fig. 16 is a cross-sectional view, taken in the axial direction of the drum, of an enlarging/reducing segment of the drum for uniformly enlarging the diameter of a cylindrical member in accordance with a third embodiment of the present invention;
Fig. 17 is a cross-sectional view, taken along line 14 - 14 of Fig. 18, of an apparatus for uniformly enlarging and reducing the diameter of a cylindrical member in accordance with a fourth embodiment of the present invention;
Fig. 18 is a side elevational view of the apparatus for uniformly enlarging and reducing the diameter of a cylindrical member shown in Fig. 17;
Fig. 19A is an enlarged view of a diameter-enlarging device and its vicinity and shows a state in which a hook has moved in the diameter-enlarging direction;
Fig. 19B is an enlarged view of the diameter-enlarging device and its vicinity and shows a state in which the hook has moved in the diameter-reducing direction;
Fig. 20 is a side elevational view, taken from the radially outward direction, of the diameter-enlarging device shown in Fig. 18A;
Fig. 21A is an enlarged view of the diameter-enlarging device and its vicinity and shows a state in which a hook roller is perpendicular to side plates;
Fig. 21B is an enlarged view of the diameter-enlarging device and its vicinity and shows a state in which the hook roller is inclined with respect to the side plates;
Fig. 22 is a diagram illustrating the operation of the apparatus for uniformly enlarging and reducing the diameter of a cylindrical member in accordance with the fourth embodiment of the present invention;
Fig. 23 is a diagram similarly illustrating the operation of the apparatus for uniformly enlarging and reducing the diameter of a cylindrical member in accordance with the fourth embodiment of the present invention;
Figs. 24A and 24B are diagrams illustrating a tire-forming operation using the apparatus for uniformly enlarging and reducing the diameter of a cylindrical member in accordance with the fourth embodiment of the present invention;
Fig. 25 is a schematic cross-sectional view, taken in the axial direction of the drum, of a prior art drum for uniformly enlarging the diameter of a cylindrical member during reduction of the diameter;
Fig. 26 is a schematic cross-sectional view, taken in the axial direction of the drum, of the prior art drum for uniformly enlarging the diameter of a cylindrical member during enlargement of the diameter;
Fig. 27 is a diagram illustrating the operation of another prior art drum for uniformly enlarging the diameter of a cylindrical member;
Fig. 28 is a diagram illustrating the operation of the prior art drum shown in Fig. 27;
Fig. 29 is a schematic cross-sectional view, taken in the direction of the drum, of the prior art drum shown in Fig. 26 during reduction of the diameter; and
Fig. 30 is a schematic cross-sectional view, taken in the direction of the drum, of the prior art drum shown in Fig. 26 during enlargement of the diameter.

### DESCRIPTION OF THE PREFERRED EMBODIMENTS

### [First Embodiment]

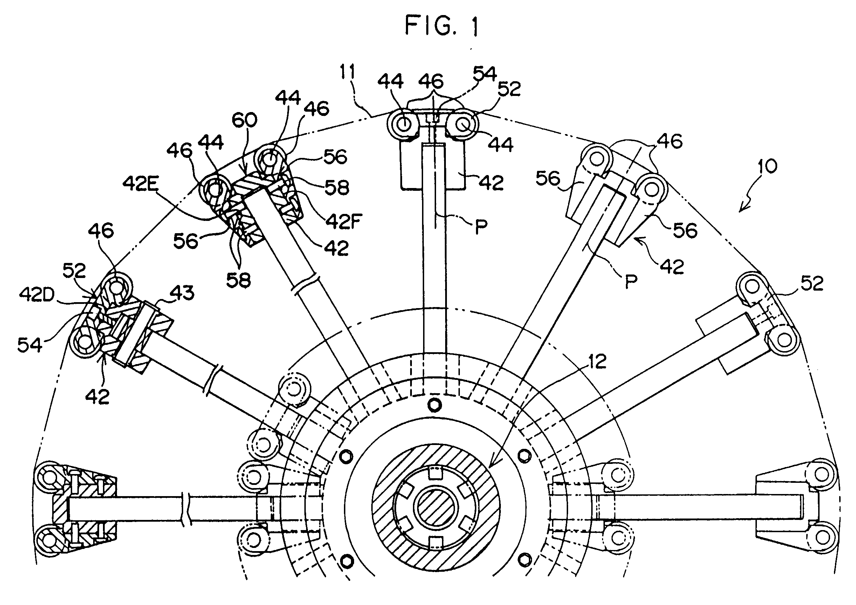

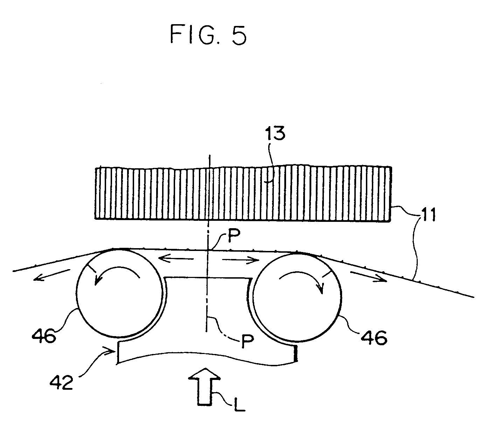

Referring now to Figs. 1 to 6, a description will be given of a first embodiment of a drum for uniformly enlarging the diameter of a cylindrical member in which the present invention is applied to the formation of a tire construction having a lower ply.

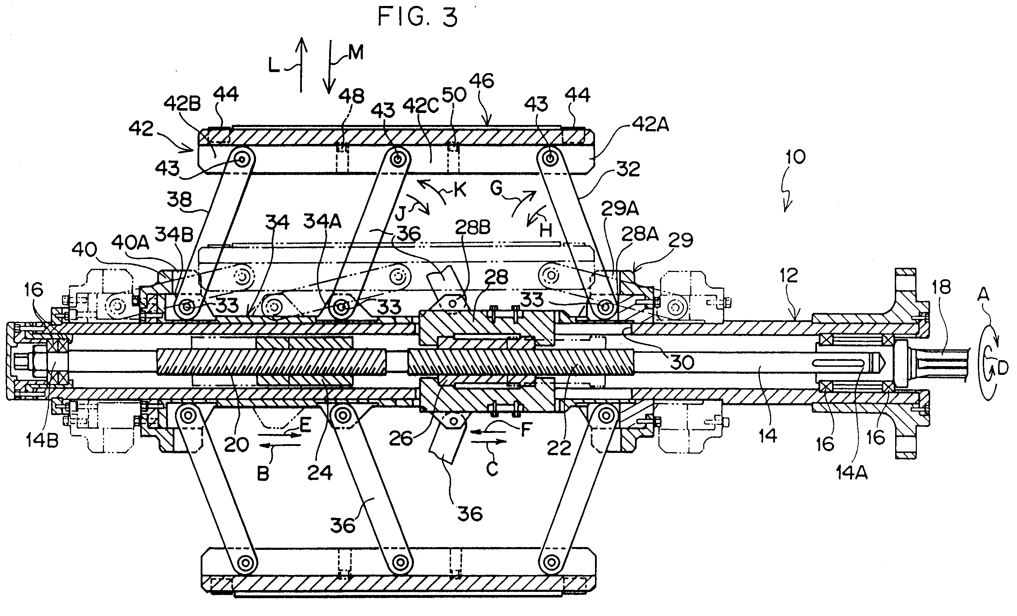

As shown in Fig. 3, a drum shaft 12 of a drum 10 for uniformly enlarging the diameter of a cylindrical member is cylindrical in shape, and a ball screw 14 is disposed in an axial center portion thereof. Both ends 14A and 14B of the ball screw 14 are rotatably supported on an inner peripheral surface of the drum shaft 12 at both ends thereof via bearings 16, respectively.

One end 14A of the ball screw 14 is connected to a rotating shaft 18, and the rotating shaft 18 is reversibly rotatable by an unillustrated motor.

Threaded portions 20 and 22 are formed on an outer periphery of the ball screw 14, and threads of these threaded portions 20 and 22 are formed in mutually opposite directions. Namely, if the threaded portion 20 is provided with a clockwise thread, the threaded portion 22 is provided with a counterclockwise thread. Meanwhile, if the threaded portion 20 is provided with a counterclockwise thread, the threaded portion 22 is provided with a clockwise thread. Ball nuts 24 and 26 are threadedly engaged on the threaded portions 20 and 22, respectively.

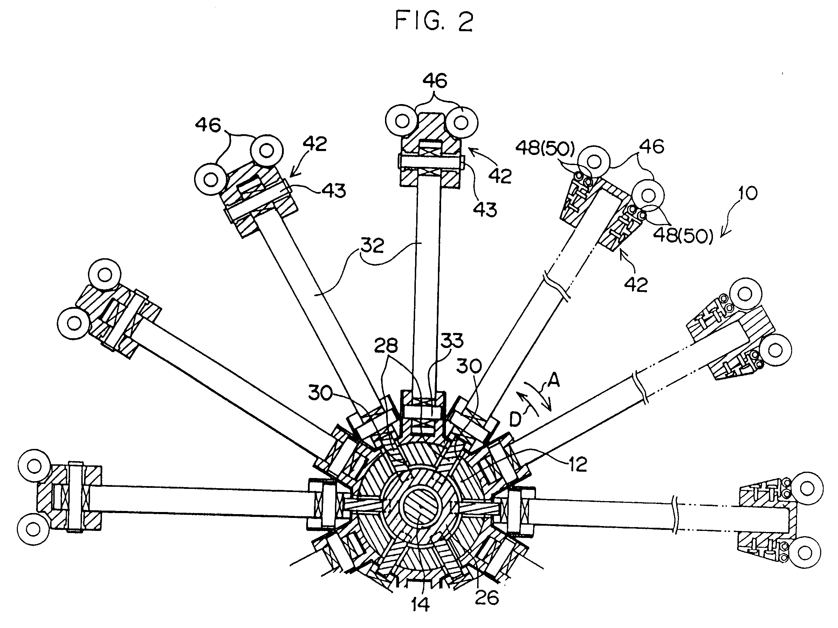

Accordingly, if the ball screw 14 is rotated, for instance, clockwise (in the direction of arrow A in Fig. 2) in Fig. 2, the ball nuts 24 and 26 move away from each other (in the direction of arrow B and in the direction of arrow C in Fig. 3). If the ball screw 14 is rotated counterclockwise (in the direction of arrow D in Fig. 2) in Fig. 2, the ball nuts 24 and 26 move in mutually approaching directions (in the direction of arrow E and in the direction of arrow F in Fig. 3).

Link boxes 28 serving as members for supporting enlarging/reducing segments are secured on an outer periphery of the ball nut 26. Each of these link boxes 28 extends through an elongated hole 30 formed in the drum shaft 12 in parallel with the axis of the drum. At a projecting portion of an end 28A (on the rotating shaft 18 side) of each link box 28, which projects from the drum shaft 12, one end of a first link 32 serving as a linking member is swingably supported by means of a pin 33. Consequently, the first links 32 are swingable in the clockwise direction in Fig. 3 (in the direction of arrow G in Fig. 3) and in the counterclockwise direction in Fig. 3 (in the direction of arrow H in Fig. 3).

An annular flange 29 for preventing the looseness of the links is secured on an outer periphery of the end 28A of the link box 28. A notch 29A having a width slightly larger than the thickness of the first link 32 is formed in this link-looseness preventing flange 29 in a face-to-face relation with the respective first link 32. When the first links 32 are raised, a proximal end portion of each first link 32 is adapted to pass through the notch 29A. For this reason, the lateral shaking of the first link 32 is prevented by inner walls of the notch 29A.

Link boxes 34 serving as members for supporting the enlarging/reducing segments are secured on an outer periphery of the ball nut 24 through an arrangement (not shown) similar to that for the ball nut 26. Each of the link boxes 34 also extends through an elongated hole (not shown) formed in the drum shaft 12 in parallel with the axis of the drum in the same way as the elongated hole 30. At a projecting portion of an end 34A (on the rotating shaft 18 side) of each link box 34, which projects from the drum shaft 12, one end of a second link 36 serving as a linking member is swingably supported by means of the pin 33. As a result, the second links 36 are supported swingably in the clockwise direction in Fig. 3 (in the direction of arrow J in Fig. 3) and in the counterclockwise direction in Fig. 3 (in the direction of arrow K in Fig. 3).

It should be noted that the second links 36 are alternately coupled to different link boxes serving as the members for supporting enlarging/reducing segments so as to be arranged in a zigzag manner in the circumferential direction of the drum. Namely, another second link 36 adjacent to one second link 36 is secured at a projecting portion of the other end 28B (on the side away from the rotating shaft 18 side) of the link box 28, which projects from the drum shaft 12.

Also, third links 38 serving as linking members are each pivotally supported by means of the pin 33 at a projecting portion of the other end 34B (on the side away from the rotating shaft 18) of the link box 34, which projects from the drum shaft 12. Accordingly, the third links 38 are supported swingably in the clockwise direction in Fig. 3 (in the direction of arrow J in Fig. 3) and in the counterclockwise direction in Fig. 3 (in the direction of arrow K in Fig. 3).

An annular flange 40 for preventing the looseness of the links is secured on an outer periphery of the end 34B of the link box 34. A notch 40A having a width slightly larger than the thickness of the third link 38 is formed in this link-looseness preventing flange 40 in a face-to-face relation with the respective third link 38. When the third links 38 are raised, a proximal end portion of each third link 38 is adapted to pass through the notch 40A. For this reason, the lateral shaking of the third link 38 is prevented by inner walls of the notch 40A.

The other ends of the first links 32, second links 36, and third links 38 are pivotally supported by longitudinally opposite ends 42A, 42B and a central portion 42C of each enlarging/reducing segment 42 by means of pins 43, respectively, so as to be swingable. Accordingly, when the first links 32, second links 36, and third links 38 are raised, the enlarging/reducing segments 42 move in the diameter-enlarging direction (in the direction of arrow L in Fig. 3) and are set in the state in which the diameter is enlarged (in the state indicated by the solid lines in Fig. 3). On the other hand, when the first links 32, second links 36, and third links 38 are lowered, the enlarging/reducing segments 42 move in the diameter-reducing direction (in the direction of arrow M in Fig. 3) and are set in the state in which the diameter is reduced (in the state indicated by the phantom lines in Fig. 3).

A pair of rollers 46 extending along the axial direction of the drum and serving as rotating members are provided on an outer periphery of each enlarging/reducing segment 42. In addition, flexure-preventing rollers 48 and 50 are provided at predetermined intervals in the axial direction in the vicinity of the longitudinally central portion 42C of the enlarging/reducing segment 42. These flexure-preventing rollers 48 and 50 abut against the rollers 46 on the drum shaft 12 side thereof so as to prevent the flexure of the rollers 46.

As shown in Fig. 1, the pair of rollers 46 are located at positions equidistanced from a center line P (on an extension line of the axial line of enlarging/reducing means of the enlarging/reducing members) of the enlarging/reducing segment 42 with the center line P located therebetween. There are two kinds of bearings for supporting shafts 44 which are rotatably fixed to opposite ends of each roller 46. Namely, first bearings 52 and second bearings 56 of different kinds are provided alternately for adjacent ones of the enlarging/reducing segments 42. The first bearing 52 is constructed such that its portions for supporting the pair of rollers 46 are linked together in the circumferential direction, the first bearing 52 being affixed to an outer peripheral portion 42D of the enlarging/reducing segment 42 by means of a screw 54.

Meanwhile, the second bearings 56 are of a two-split type and are used in pairs for separately supporting the pair of rollers 46, each of the second bearings 56 being affixed to a side wall 42E or 42F of the enlarging/reducing segment 42. Accordingly, in the enlarging/reducing segment 42 on which the second bearings 56 are provided, a recess 60 extending through along the axial direction of the drum is formed between the pair of rollers 46 of the enlarging/reducing segment 42, and does not abut against a lower ply 11 serving as the cylindrical member wound around the outer periphery of the drum 10 for uniformly enlarging the diameter of a cylindrical member. It should be noted that the size of this recess 60 is 25 mm in width and 20 mm in depth, so that hooks or the like can be inserted into the respective recesses between the drum 10 and the lower ply 11 with the diameter of the lower ply 11 enlarged.

Next, a description will be given of the operation of this embodiment.

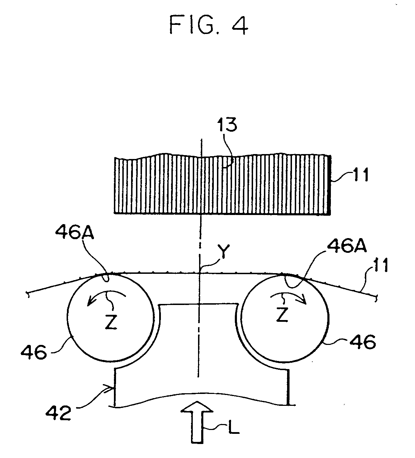

With the drum 10 for uniformly enlarging the diameter of a cylindrical member in accordance with the present invention, when the plurality of enlarging/reducing segments 42 are moved in the diameter-enlarging direction (in the direction of arrow L in Fig. 4), a tensile force acting on the lower ply 11 in the circumferential direction is balanced at a position Y in the lower ply 11 which opposes the center line P of the enlarging/reducing segment 42. Each pair of rollers 46 are in contact with the lower ply 11 with this position located therebetween. Accordingly, contact portions 46A of the rollers 46 contacting the lower ply 11 move away from this position of balance Y (in the directions of arrow Z in Fig. 4) simultaneously as the diameter of the enlarging/reducing segments 42 is enlarged. For this reason, the transfer of the contact portion of the lower ply 11 with the rollers 46 is not restrained by the rollers 46, so that the lower ply 11 is enlarged uniformly, thereby making it possible to prevent the variation of the pitches of cords 13 of the lower ply 11.

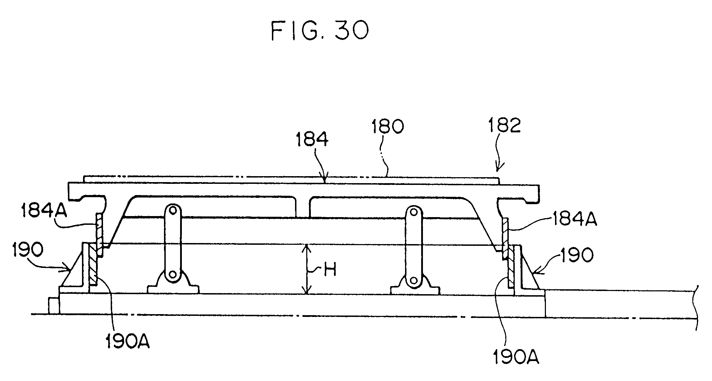

In this embodiment, the second links 36 at the central portions, as viewed in the axial direction of the drum, of the enlarging/reducing segments 42 are disposed such that positions where they are coupled to the link boxes are arranged in a zigzag manner in the circumferential direction of the drum. Hence, supporting portions of the immediately adjacent second links 36 do not interfere with each other. In addition, by using three links for enlarging the diameter of each enlarging/reducing segment 42, the misalignment of the lower ply 11 can be prevented, the looseness of the enlarging/reducing segments 42 can be reduced, and segment flanges 190 (see Figs. 30) which are conventionally used can be eliminated. Accordingly, there is no longer the restriction caused by the height of the segment flanges, so that it is possible to increase the rate of enlargement of the drum 10 for uniformly enlarging the diameter of a cylindrical member to 200% or thereabouts.

In addition, in this embodiment, since the recess 60 extending through along the axial direction of the drum is formed between the pair of rollers 46 of the enlarging/reducing segment 42, it is possible to insert hooks into the respective recesses 60 and easily remove the lower ply 11 from the outer periphery of the drum 10 in a state in which the diameter of the lower ply 11 is being enlarged.

Accordingly, the following procedure is taken when a raw tire is formed by using the lower ply 11 with an enlarged diameter by means of the drum 10 in accordance with this embodiment.

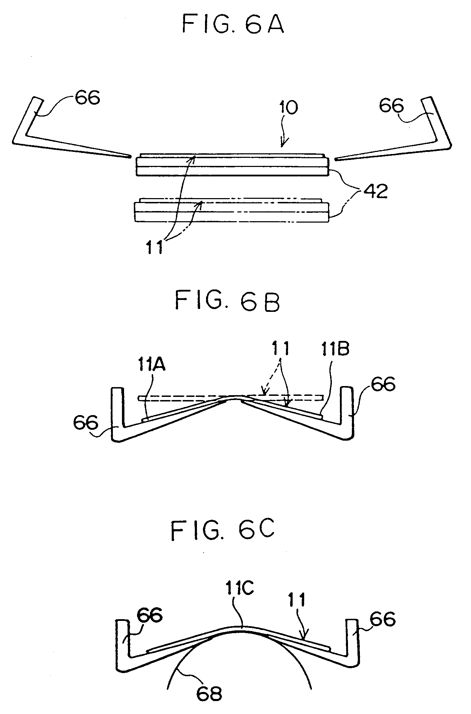

As shown in Fig. 6A, in a state in which the diameter of the drum 10 is enlarged (in the state indicated by the solid lines in Fig. 6A), hooks 66 are inserted between the enlarging/reducing segments 42 and the lower ply 11 from the both axial ends of the drum.

Next, the drum 10 is set in a state of the reduced diameter (in the state indicated by the phantom lines in Fig. 6A), the lower ply 11 is removed from the outer periphery of the drum 10 in the state in which the diameter of the lower ply 11 is enlarged, and the lower ply 11 is transported by means of the hooks 66, as shown in Fig. 6B. At that time, while the lower ply 11 is being transported, both ends 11A and 11B of the lower ply 11 undergo a reduction in the diameter.

Subsequently, as shown in Fig. 6C, in the state in which a central portion 11C of the lower ply 11 is maintained in the state of the enlarged diameter, the lower ply 11 is set on the outer side of an upper ply 68, and the hooks 66 are subsequently drawn out.

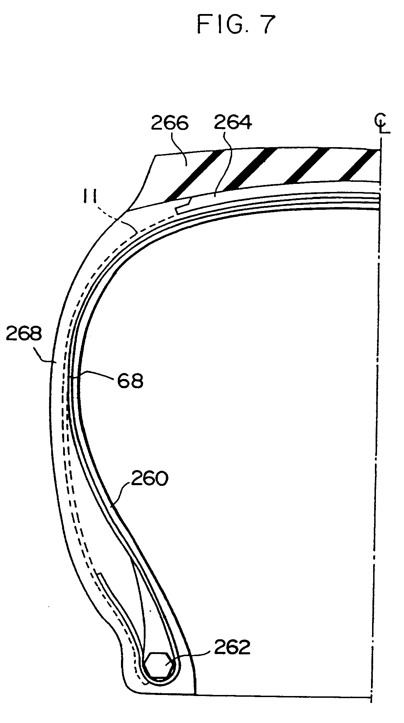

It should be noted that, as shown in Fig. 7, the upper ply 68 covers an inner liner 260 set on the drum, and is turned up in such a manner as to enwrap a bead core 262 arranged on the inner peripheral side of the tire. The lower ply 11 is set on this upper ply 68, and a belt 264 and a tread rubber layer 266 are attached to the ground-contacting side of the tire, while a sidewall rubber layer 268 is set on the outer upright side.

Conventionally, it has been impossible to form the lower ply 11 and the upper ply 68 with the same diameter and the same fabric. However, in the present embodiment, the lower ply 11 and the upper ply 68 can be formed with the same diameter and the same fabric.

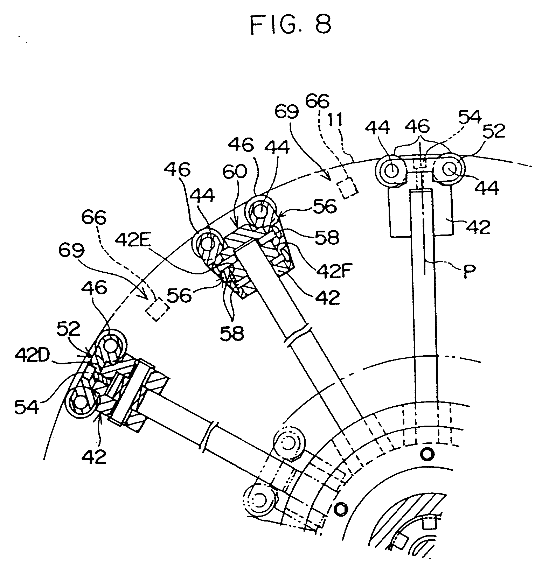

Although the hooks 66 are inserted into the respective recesses 60 which are each formed between the pair of rollers 46 of the enlarging/reducing segment 42, an arrangement may be provided such that, as shown in Fig. 8, each hook 66 is inserted at a position 69 between adjacent ones of the enlarging/reducing segments 42, the drum 10 is made to undergo a reduction in diameter in this state, and the lower ply 11 is then transported by the hooks 66.

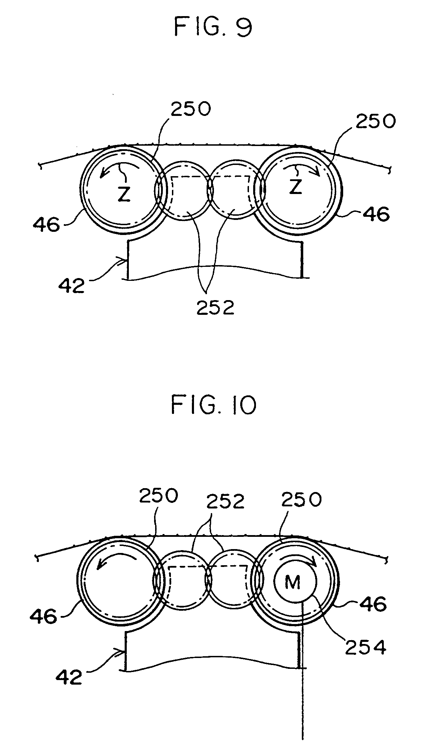

Although, in the above-described embodiment, the pairs of rollers 46 of the enlarging/reducing segment 42 are supported rotatably by the first bearings 52 and the second bearings 56, an arrangement may be provided such that, as shown in Fig. 9, gears 250 which are secured to the shafts of each pair of rollers 46 are made to engage to transmitting gears 252 located therebetween, so that the rollers 46 are made to rotate in mutually opposite directions (in the directions indicated by arrow Z in Fig. 9) by an equal amount. Also, as shown in Fig. 10, an arrangement may be provided such that an amount of rotation of the ball screw 14 (see Fig. 3) is detected by an unillustrated encoder so as to allow a controller to control the number of revolutions of a motor 254 for driving each pair of rollers 46, and each pair of rollers 46 are made to rotate in the mutually opposite directions by an equal amount in correspondence with an amount of enlargement in the radial direction of the enlarging/reducing segments 42. This eliminates the variation of the amount of rotation of each pair of rollers 46, so that the variation of the cord pitch of the lower ply 11 can be prevented reliably.

### [Second Embodiment]

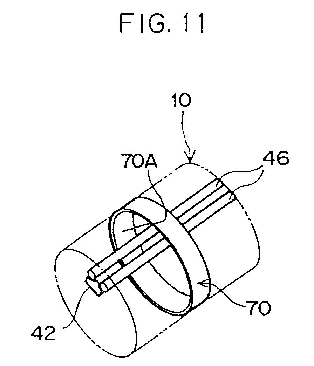

Referring now to Figs. 11 to 14, a description will be given of a second embodiment of the drum for uniformly enlarging the diameter of a cylindrical member in accordance with the present invention. It should be noted that the same members as those of the first embodiment will be denoted by the same reference numerals, and a description thereof will be omitted.

As shown in Fig. 11, in this embodiment, a thin rubber band 70 is wrapped around a substantially central portion of the drum 10 as viewed in the axial direction of the drum, and an inner surface 70A of this rubber band 70 has a large coefficient of friction.

In this embodiment, the rubber band 70 is provided with a width of 100 mm and a thickness of 2.4 mm, and organic textile cords for reinforcement are embedded therein.

Accordingly, when the drum 10 is made to undergo an enlargement in diameter, the rubber band 70 makes it possible to prevent the faulty rotation of the rollers 46 and prevent the variation of the cord pitch occurring due to the faulty rotation.

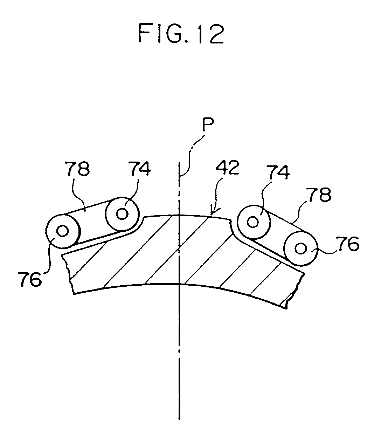

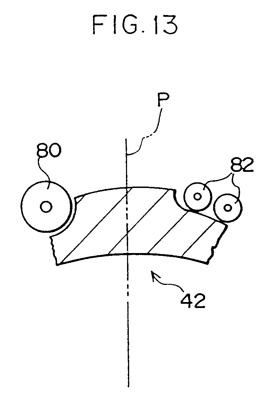

Although, in the foregoing embodiments, as the rotating members, a pair of rollers 46 of the same diameter are provided for each enlarging/reducing segment 42, the rotating members are not limited to the rollers 46. For instance, as shown in Fig. 12, two belts 78 each trained between two rollers 74 and 76 may be disposed with the center line P of the enlarging/reducing segment 42 located therebetween. Alternatively, as shown in Fig. 13, a large-diameter roller 80 and a pair of small-diameter rollers 82 may be disposed with the center line P of the enlarging/reducing segment 42 located therebetween.

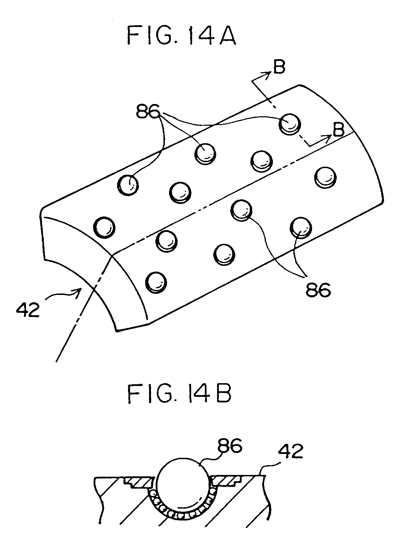

Furthermore, as shown in Figs. 14A and 14B, two or more rows of ball bearings 86, which are known as rotating members, may be disposed on the outer periphery of the enlarging/reducing segment 42 along the axial direction of the drum on either side of the center line P of the enlarging/reducing segment 42.

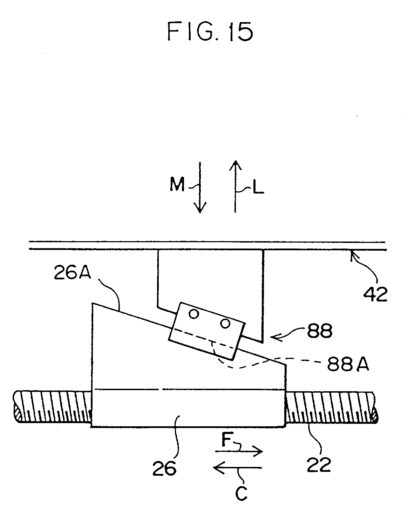

Although, in the foregoing embodiments, the linking members are constituted by the first links 32, the second links 36, and the third links 38, the linking members are not limited to the same. For instance, as shown in Fig. 15, an arrangement may be provided such that a tapered portion 26A of the ball nut 26 is made to engage a guide groove 88A formed in a known taper cone-type cam 88 so as to be coupled to the enlarging/reducing segment 42, so that the enlarging/reducing segment 42 is moved in the diameter-enlarging direction (in the direction of arrow L in Fig. 15) and in the diameter-reducing direction (in the direction of arrow M in Fig. 15) as the ball nut 26 moves in the direction of arrow F or in the direction of arrow C.

### [Third Embodiment]

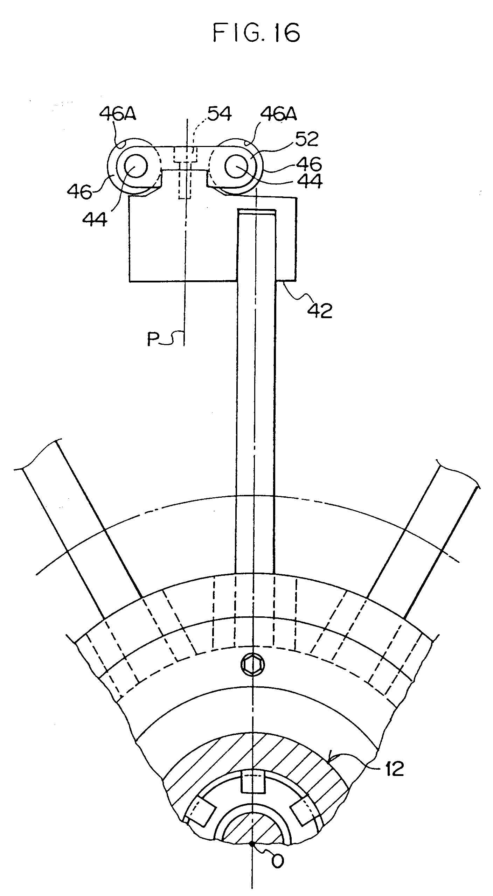

Referring now to Fig. 16, a description will be given of a third embodiment of the drum for uniformly enlarging the diameter of a cylindrical member in accordance with the present invention. It should be noted that the same members as those of the first embodiment will be denoted by the same reference numerals, and a description thereof will be omitted.

In the third embodiment shown in Fig. 16, the enlarging/reducing segments 42 provided with a plurality of rotating members do not move on radial lines respectively extending from a center O of the drum shaft 12, but are set to move in parallel with the radial lines on either the left- or right-hand side thereof. In this example, the tensile force acting on the cylindrical member (lower ply 11) in the circumferential direction as a result of the enlargement is balanced at the center line P of each enlarging/reducing segment 42 or at a position slightly offset to the left or the right from the center line P, depending on the positions of the two rollers 46 provided on the enlarging/reducing segment 42. The lower ply 11 is elongated to the left or the right with this position of balance located therebetween. In this embodiment as well, in the same way as the first embodiment, the contact portions 46A of the rollers 46 contacting the lower ply 11 move in directions away from the aforementioned position of balance, and the expansion of the contact portions of the lower ply 11 contacting the rollers 46 is not restrained by the rollers 46, thereby allowing the lower ply 11 to be expanded uniformly.

### [Fourth Embodiment]

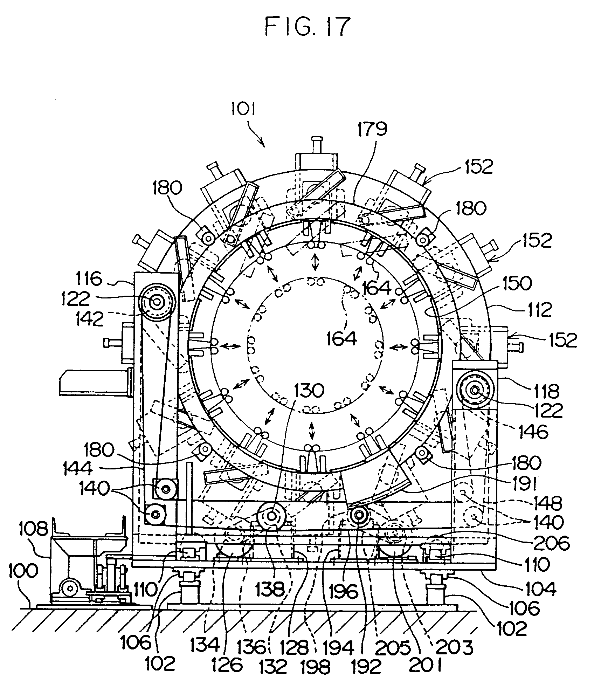

Referring now to Figs. 17 to 24, a description will be given of a fourth embodiment of the present invention. It should be noted that the same members as those of the first embodiment will be denoted by the same reference numerals, and a description thereof will be omitted.

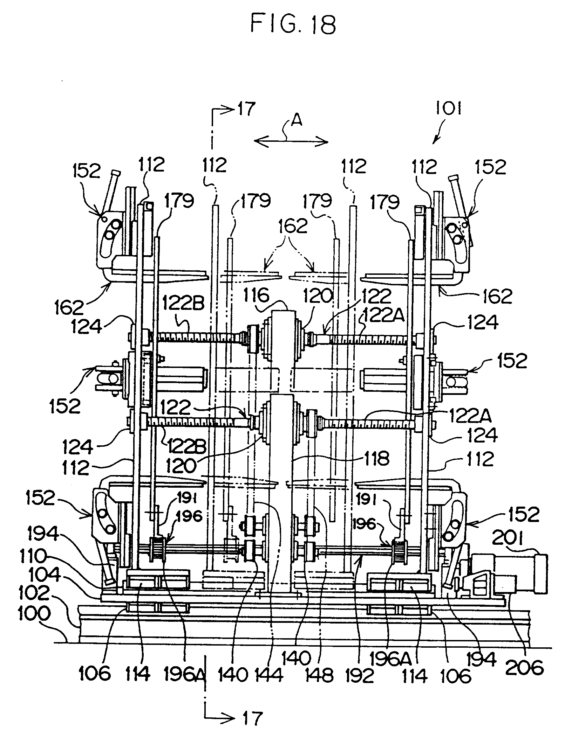

As shown in Figs. 17 and 18, an apparatus 101 for uniformly enlarging or reducing the diameter of a cylindrical member in accordance with this embodiment is constructed such that a body base 104 is movably supported via linear-motion bearings 106 on a pair of bearing guides 102 which are secured on a floor surface 100 and are arranged in parallel with each other. This body base 104 can be moved along the bearing guides 102 by means of a driving device 108.

A pair of bearing guides 110 are mounted on the upper surface of the body base 104 in parallel with the bearing guides 102.

As shown in Fig. 18, a pair of side plates 112 are disposed in parallel with each other on the upper sides of the bearing guides 110 on both sides thereof with longitudinally central portions located therebetween. These side plates 112 are movably supported by the bearing guides 110 by means of a pair of linear-motion bearings 114 respectively mounted at lower ends thereof.

As shown in Figs. 17 and 18, a column 116 and a column 118 are disposed upright on the upper surface of the body base 104 between the pair of side plates 112.

A bearing 120 is attached to an upper end of each of the column 116 and the column 118, and a shaft 122 is rotatably supported by the bearing 120. A clockwise thread 122A is formed on the shaft 122 on one side of the bearing 120, and a counterclockwise thread 122B is formed on the other side thereof. The clockwise and counterclockwise threads 122A and 122B are engaged with internal thread portions (not shown) of bosses 124 provided in the side plates 112, respectively. Accordingly, as the shaft 122 rotates, the side plates 112 move in directions of approaching and moving away from each other (in the directions of the double-headed arrow A).

A motor 126 is disposed on the upper surface of the body base 104 in the vicinity of the column 116 on the outer side of one side plate 112, and a pair of bearings 128 are disposed on the outer side of the side plate 112. It should be noted that the motor 126 is connected to an unillustrated controller, and its operation is controlled by the controller. A rotary encoder (not shown) connected to the controller is in turn connected to the motor 126.

These bearings 128 axially support vicinities of both ends of a shaft 130 passing through the side plates 112. Each side plate 112 is provided with an unillustrated notch allowing the shaft 130 to pass therethrough.

An end of this shaft 130 on the motor 126 side projects from the bearing 128 by a predetermined dimension, and a pulley 132 is secured to a tip thereof (see Fig. 17). Meanwhile, a pulley 134 is also secured to a rotating shaft of the motor 126, and a belt 136 is trained between the pulley 132 and the pulley 134.

A pair of pulleys 138 are secured to an intermediate portion of the shaft 130 with a central portion of the shaft 130 located therebetween. A belt 144 is wound around one of the pair of pulleys 138, small pulleys 140 mounted on the lower side of the column 116, and a pulley 142 secured to the shaft 122 of the column 116.

Meanwhile, a belt 148 is wound around the other one of the pair of pulleys 138, small pulleys 140 mounted on the lower side of the column 118, and a pulley 146 secured to the shaft 122 of the column 118.

As shown in Fig. 17, a circular large-diameter hole 150 is formed in a central portion of each side plate 112, and diameter-enlarging devices 152 are mounted on the radially outer side of the large-diameter hole 150 at predetermined pitches in the circumferential direction.

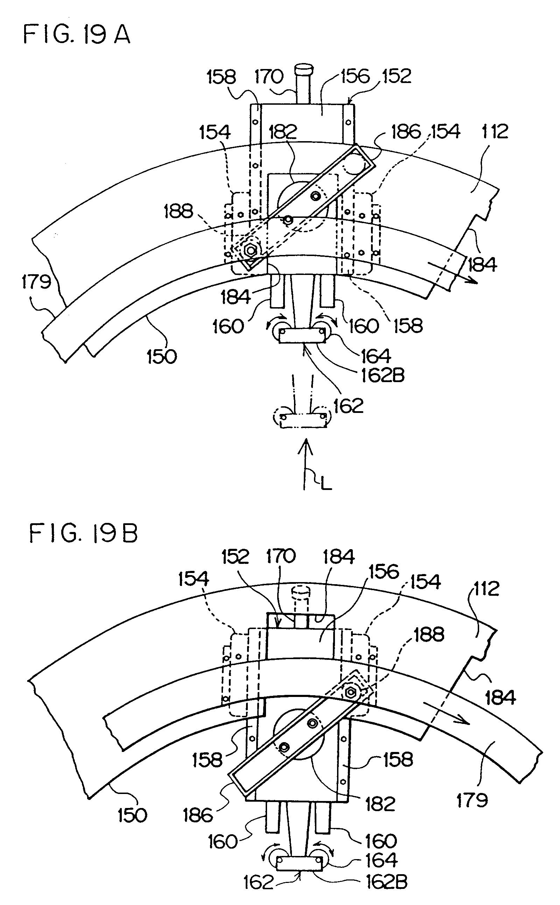

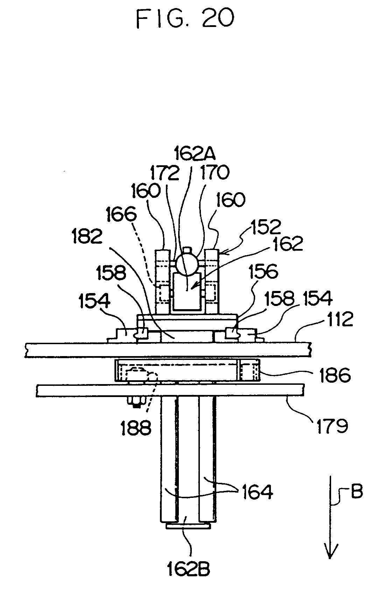

As shown in Figs. 19A and 20, the diameter-enlarging device 152 has a pair of bearing guides 154 constituting parts of an enlarging/reducing mechanism. These bearing guides 154 are arranged in parallel with each other and are affixed to the outer side of the side plate 112, and a center line between the two bearing guides 154 coincides with the radial direction of the large-diameter hole 150.

A diameter-enlarging guide 156 which constitutes another part of the enlarging/reducing mechanism. A pair of bearings 158 for linear motion, which form pairs with the bearing guides 154 and constitute parts of the enlarging/reducing mechanism, are provided on both sides of the diameter-enlarging guide 156. Consequently, the diameter-enlarging guide 156 is supported movably along the bearing guides 154.

A pair of side plates 160 are secured to the diameter-enlarging guide 156 in parallel with each other along the longitudinal direction of the bearing guides 154.

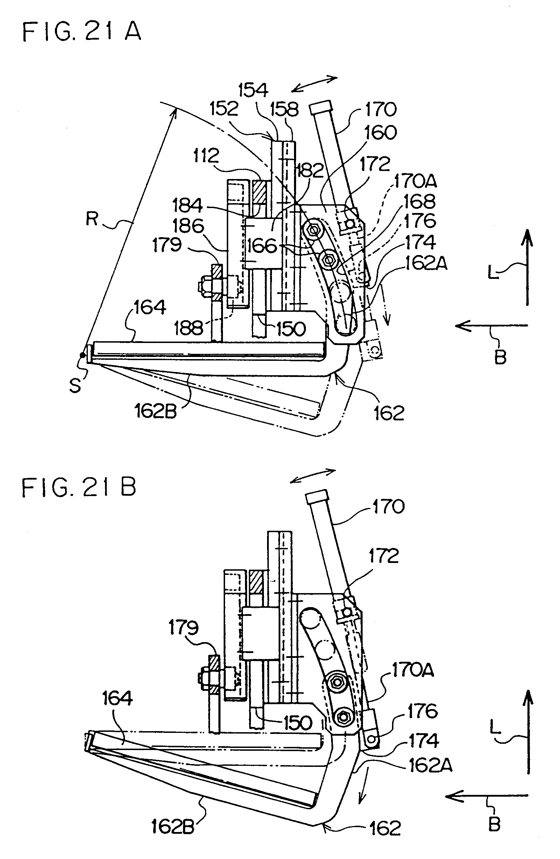

As shown in Figs. 20 and 21A, a proximal portion 162A of a hook 162, which serves as a member for supporting the enlargement and reduction, is disposed between the side plates 160. As shown in Fig. 21A, the hook 162 has a substantially L-shaped configuration, and a roller-receiving portion 162B extending toward the inner side (in the direction of arrow B) of the side plate 112 via the large-diameter hole 150 is provided integrally with one end of the proximal portion 162A on the radially inward side (on the opposite side to the direction of arrow L) of the large-diameter hole.

As shown in Figs. 19 and 21A, a pair of rotating rollers 164 serving as rotating members are rotatably provided on the roller-receiving portion 162 on the radially outward side (in the direction of arrow L) of the large-diameter hole 150 along the longitudinal direction thereof.

As shown in Figs. 20 and 21A, a pair of guide rollers 166 are provided on the proximal portion 162A of the hook 162 on each side plate 160 side. These guide rollers 166 are inserted in an arcuate slot 168 formed in each side plate 160. As shown in Fig. 21A, a center of curvature, S, of the arcuate slot 168 substantially coincides with a distal end of the roller-receiving portion 162B.

A cylinder 170 constituting another part of the enlarging/reducing mechanism is disposed between the side plates 160. The cylinder 170 is swingably supported by the side plates 160 by means of a pin 172, and a cylinder rod 170A of the cylinder 170 has is distal end supported via a pin 176 by a bearing 174 provided on the proximal portion 162A of the hook 162. Accordingly, when the cylinder rod 170A is extended or retracted, the hook 162 swings about the distal end of the roller-receiving portion 162B, and is capable of moving between a position in which the roller-receiving portion 162B is perpendicular to the side plates 160 (see Fig. 21A) and a position in which the proximal portion 162A side thereof is inclined toward the center of the large-diameter hole 150 (see Fig. 21B).

As shown in Figs. 17 and 18, a pair of annular enlarging/reducing rings 178 are respectively disposed on the inner sides of the side plates 112 in parallel with each other coaxially with the large-diameter hole 150. It should be noted that the inside diameter of each enlarging/reducing ring 178 is substantially identical with that of the large-diameter hole 150.

As shown in Fig. 17, each enlarging/reducing ring 178 is rotatably supported by the side plate 112 by means of a plurality of support rollers 180 arranged on the inner side of the side plate 112.

As shown in Fig. 19, the diameter-enlarging guide 156 is provided with a boss 182, and a tip of the boss 182 projects to the inner side of the side plate 112 through a notch 184 formed in the side plate 112.

An inclined guide 186 having a U-shaped cross section is fixed to the tip of the boss 182. The inclined guide 186 has a U-shaped cross section and its enlarging/reducing ring 178 side is open. As shown in Figs. 19A and 21A, the inclined guide 186 is inclined substantially at an angle of 450 with respect to the radial direction (the direction of arrow L and the opposite direction thereto) of the large-diameter hole 150. A guide roller 188 attached to the enlarging/reducing ring 178 is movably inserted in a groove portion of the inclined guide 186. Accordingly, if the enlarging/reducing ring 178 rotates relative to the side plate 112, the guide rollers 188 move in the circumferential direction, so that the inclined guides 186 whose inner walls are guided by the guide rollers 188, i.e., the hooks 162 attached to the diameter-enlarging guides 156 are moved in the radial direction of the large-diameter hole 150 (see Figs. 19A and 19B).

As shown in Fig. 17, a sector gear is attached to the enlarging/reducing ring 178 on the lower side thereof.

As shown in Figs. 17 and 18, a shaft 192 is disposed below the enlarging/reducing ring 178 in parallel with the shaft 130. This shaft 192 has an intermediate portion passing through respective notches (not shown) formed in the side plates 112, and is axially supported by a pair of bearings 194 mounted on the upper surface of the body base 104.

As shown in Fig. 18, an intermediate portion of this shaft is formed with splines, and two gears 196 are supported on the splines in such a manner as to be movable in the axial direction. These gears 196 has keyways (not shown) mating with the splines, and each of the gears 196 is provided with a pair of flanges 196A for sandwiching the sector gear 196. Consequently, the gears 196 are capable of moving in the axial direction of the shaft 192, but cannot rotate relative to the shaft 192.

One of the gears 196 meshes with the sector gear 190 of one of the enlarging/reducing rings 178, while the other meshes with the sector gear 190 of the other one of the enlarging/reducing rings 178.

One end of the shaft 192 projects outside the bearing 194, and a pulley 198 is secured thereon. A motor 200 is disposed on the side of the pulley 198, and a pulley 202 is secured on a shaft of the motor 200. In addition, a belt 204 is trained between the pulley 198 and the pulley 202. It should be noted that the motor 200 is connected to the unillustrated controller, and its operation is controlled by the controller. Also, a rotary encoder 206 connected to the controller is in turn connected to the motor 200 via an unillustrated timing belt.

The operation of this embodiment will be described hereafter.

When a lower ply 11 is mounted on the apparatus 101 for uniformly enlarging or reducing the diameter of a cylindrical member in accordance with this embodiment, the hooks 162 are first moved toward the center of the large-diameter hole 150 (in the opposite direction to the direction of arrow L) to effect a reduction in the diameter (in the state indicated by the two-dotted dash lines in Fig. 18). At the same time, the side plates 112 are spaced apart from each other (in the state indicated by the solid lines in Fig. 18), the lower ply 11 is set between the opposing hooks 162, the side plates 112 are made to approach each other (in the state indicated by the two-dotted dash lines in Fig. 18), and the roller-receiving portions 162B of the hooks 162 are inserted to the inner side of the lower ply 11. Subsequently, the enlarging/reducing rings 178 are rotated to move the hooks 162 in the diameter-enlarging direction (in the state indicated by the solid lines in Fig. 17).

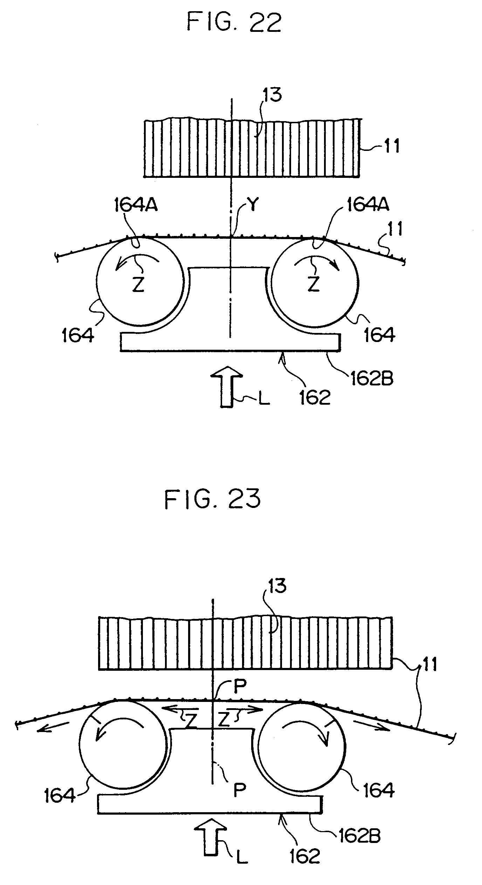

As shown in Fig. 22, with the apparatus 101 for uniformly enlarging or reducing the diameter of a cylindrical member in accordance with this embodiment, when the plurality of hooks 162 move in the diameter-enlarging direction (in the direction of arrow L in Fig. 22), the tensile force acting on the lower ply 11 in the circumferential direction is balanced at the position Y of the lower ply 11 opposing the center line P of the hook 162 in the same way as in the first embodiment, and the respective rollers 164 abut against the lower ply 11 with this position located therebetween. Accordingly, as the hooks 162 undergo an enlargement in diameter, contact portions 164A of the rollers 164 contacting the lower ply 11 move away from the position of balance Y (in the directions of arrow Z in Fig. 23), as shown in Fig. 23. For this reason, the expansion of the contact portions of the lower ply 11 contacting the rollers 164 is not restrained by the rollers 164, so that the diameter of the lower ply 11 is enlarged uniformly, thereby making it possible to prevent the variation of the pitches of cords 13 of the lower ply 11.

The following procedure is taken when the tire is formed by using the lower ply 11 with an enlarged diameter by means of the apparatus 101 in accordance with the present invention.

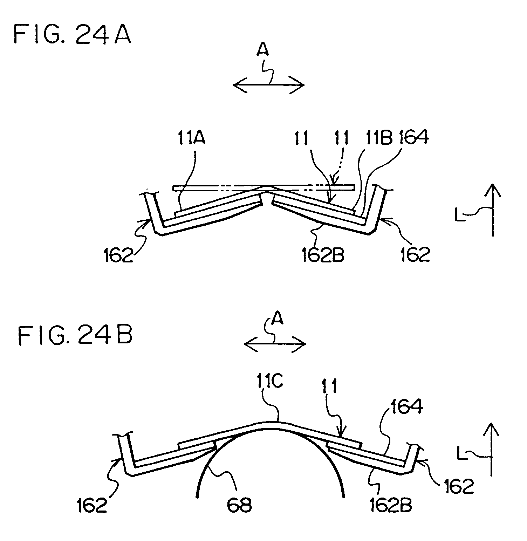

In the state in which the diameter of the apparatus 101 is enlarged (in the state indicated by the two dotted-dash lines in Fig. 24A), the apparatus 101 is moved along the bearing guides 102, and the lower ply 11 is transported to the upper ply 68 side.

As shown by the solid lines in Fig. 24A, while the lower ply 11 is being transported, the hooks 162 are inclined to cause the opposite ends 11A and 11B to undergo a reduction in diameter.

Then, as shown in Fig. 24B, in the state in which the central portion 11C of the lower ply 11 is maintained in the state of the enlarged diameter, the lower ply 11 is set on the outer periphery of the upper ply 68, and the hooks 162 are subsequently drawn out.

Thus, in the process in which the lower ply 11 mounted on the hooks 162 is directly set on the outer periphery of the upper ply 68, the cord pitch of the lower ply 11 can be maintained uniformly.

## Claims

1. An apparatus for uniformly enlarging the diameter of a cylindrical member, which has a plurality of enlarging/reducing members and enlarging/reducing means of said enlarging/reducing members, characterized in that a plurality of rotating members (46) are arranged at predetermined intervals in a circumferential direction of the cylindrical member (11) and are adapted to support the cylindrical member (11) from an inner side of the cylindrical member (11), that said plurality of enlarging/reducing members (42) rotatably support said rotating members (46), and that said enlarging/reducing means (14, 20, 22, 24, 26, 28, 32, 36, 38) support said enlarging/reducing members (42) and are adapted to move the enlarging/reducing members (42) in a radial direction of the cylindrical member (11).

2. The apparatus according to Claim 1, characterized in that each of said rotating members is constituted by a pair of rollers (46) extending in an axial direction of the cylindrical member (11) and disposed symmetrically about a radial line of the cylindrical member.

3. The apparatus according to Claim 1, characterized in that each of said rotating members comprises two pairs of rollers (74, 76) extending in an axial direction of the cylindrical member (11) and disposed symmetrically about a radial line of the cylindrical member, and two belts (78) each trained between each pair of said rollers.

4. The apparatus according to Claim 1, characterized in that a plurality of balls (86) portions of which are brought into contact with an inner surface of the cylindrical member (11) are rotatably embedded in an outer surface of each of said enlarging/reducing members.

5. The apparatus according to Claim 1, characterized in that each of said rotating members is arranged such that a large-diameter roller (80) and a pair of small-diameter rollers (82) extending in an axial direction of the cylindrical member (11) are respectively disposed on mutually opposite sides of a radial line of the cylindrical member.

6. The apparatus according to Claim 2, characterized in that said pair of rollers (46) are disposed such that a center line (P) of symmetry of said pair of rollers (46) is offset from the radial line of the cylindrical member.

7. The apparatus according to Claim 2, characterized in that said enlarging/reducing member is provided with a flexure-preventing roller (48, 50) for rotatably supporting an axially intermediate portion of each of said rollers (46).

8. The apparatus according to Claim 2, characterized in that an inserting portion (60) is formed between said pair of rollers (46) for allowing a removing member for removing the cylindrical member (11) from said enlarging/reducing member with the diameter of the cylindrical member (11) enlarged to be inserted thereinto from the axial direction.

9. The apparatus according to Claim 2, characterized in that rotational-amount controlling means (250, 252) is provided for controlling said pair of rollers (46) in such a manner that said pair of rollers (46) rotate in mutually opposite directions by an equal amount in synchronism with each other.

10. The apparatus according to Claim 2, characterized in that rotational-amount adjusting and controlling means (250, 252, 254) is provided for controlling said pair of rollers (46) in such a manner that said pair of rollers (46) rotate in mutually opposite directions by an equal amount in synchronism with each other in correspondence with an amount of expansion of the cylindrical member (11).

11. The apparatus according to Claim 1, characterized in that said enlarging/reducing means comprises a pair of moving bodies (24, 26, 28) capable of moving in mutually opposite directions along an axial direction of the cylindrical member (11), and a linking member (32, 36, 38) having one end rotatably attached to said moving body and extending radially from said moving body and another end rotatably attached to said enlarging/reducing member.

12. The apparatus according to Claim 11, characterized in that a multiplicity of linking members (32, 36, 38) are provided as said linking member, and are attached to said moving bodies (24, 26, 28) along an axial direction thereof in such a manner as to be offset from each other along the circumference of said moving bodies.

13. The apparatus according to Claim 11, characterized in that said moving body includes a threaded member (20, 22) to be rotated, a ball nut (24, 26) meshing with said threaded member, and a link box (28, 34) secured to said ball nut and to which said linking member is attached.

14. The apparatus according to Claim 11, characterized in that said enlarging/reducing member (42) is supported by said linking member (32, 36, 38) at three points spaced apart from each other along an axial direction of the enlarging/reducing member.

15. A drum for uniformly enlarging the diameter of a cylindrical member, which has a drum shaft, a plurality of enlarging/reducing segment-supporting members, and a plurality of enlarging/reducing segments, characterized in that said drum shaft (12) is disposed on an axis of the cylindrical member (11), that a cylinder (28, 34) is adapted to move along said drum shaft, that said plurality of enlarging/reducing segment-supporting members (32, 36, 38) extend radially from said cylinder and are capable of enlarging the diameter of said drum as said cylinder moves, that said plurality of enlarging/reducing segments (42) are respectively supported by said enlarging/reducing segment-supporting members, and that at least two rotating members (46) are supported by said enlarging/reducing segment and adapted to support an inner surface of the cylindrical member (11) at portions spaced apart from each other in a circumferential direction thereof.

16. The drum according to Claim 15, characterized in that said rotating member is constituted by a pair of rollers (46) extending in an axial direction of the cylindrical member (11), and a center line of symmetry of said pair of rollers is offset from a radial line of the cylindrical member.

17. The drum according to Claim 15, characterized in that a tightening member (70) is provided for tightening an outer peripheries of said rotating members to prevent the variation of rotation of said rotating members.

18. The drum according to Claim 15, characterized in that said enlarging/reducing segment-supporting member includes a moving member (26) adapted to move along an axial direction of the cylindrical member (11), and a cam (88) having one surface secured to said enlarging/reducing segment (42) and another surface engaging a tapered surface (26A) of said moving member so as to enlarge or reduce the diameter of the enlarging/reducing member as said moving member moves.

19. The drum according to Claim 15, characterized in that a stopper (29) is provided for preventing the looseness of said enlarging/reducing segment-supporting member when said enlarging/reducing segment-supporting member undergoes an enlargement of diameter and is set in an upright state.

20. A method of enlarging the diameter of a cylindrical member for uniformly extending in a radial direction a plurality of portions of a cylindrical member spaced apart from each other in a circumferential direction of the cylindrical member, characterized by comprising the steps of:
arranging rotating members (46) at predetermined intervals in the circumfrential direction of the cylindrical member (11);
supporting an inner surface of the cylindrical member by means of said rotating members in such a manner as not to impede a tensile force acting on the cylindrical member in the circumferential direction during enlargement of the diameter; and
driving said rotating members in a radially outward direction of the cylindrical member so as to uniformly stretch contact portions of the cylindrical member contacting said rotating members.

21. An apparatus for uniformly enlarging or reducing the diameter of a cylindrical member, which has a plurality of hooks and sets the cylindrical member which is in a state of enlarged diameter onto an outer periphery of a mounting member, characterized in that said plurality of hooks (162) are arranged at positions spaced apart from each other in a circumferential direction of the cylindrical member (11) in correspondence with both axial ends of the cylindrical member and are adapted to be inserted from both axial sides of the cylindrical member to maintain the state of enlarged diameter, that a plurality of rotating members (164) are respectively provided for said hooks and are disposed at positions of contact with the cylindrical member, that a pair of support plates (112) swingably support outer ends of said plurality of hooks in a radial direction of the cylindrical member in correspondence with the axial ends of the cylindrical member, that swinging means (152) is provided for swinging said hooks, that enlarging and reducing means (179, 186, 188) is provided for moving said hooks in the radial direction of the cylindrical member (11), and that moving means (122) is provided for moving said support plates in directions in which said support plates move toward or away from each other.

22. The apparatus according to Claim 21, characterized in that said enlarging and reducing means includes rings (179) each rotatably mounted on said support plate, and inclined guides (186) each disposed on said hook and adapted to engage said ring to transform the rotational movement of said ring into the radial movement of the cylindrical member.

23. The apparatus according to Claim 21, characterized in that said swinging means is constituted by a cylinder (170) for pushing or pulling another end of each of said hooks along a guide groove formed in said support plate.
